# EUROPEAN PATENT SPECIFICATION

(11) **EP 1 378 539 B1**
(45) Date of publication and mention of the grant of the patent: **22.11.2006**
(21) Application number: 02702762.2
(22) Date of filing: 06.03.2002
(51) Int. Cl.: C08L 33/04, C08K 5/17, C08K 5/00

(54) **ACRYLIC RUBBER COMPOSITION AND VULCANIZATE**
ACRYLKAUTSCHUKZUSAMMENSETZUNG UND VULKANISAT
COMPOSITION ET VULCANISAT DE CAOUTCHOUC ACRYLIQUE

(30) Priority: 06.03.2001 JP 2001061145
(43) Date of publication of application: 07.01.2004
(73) Proprietor: ZEON CORPORATION, Tokyo 100-8323 (JP)
(72) Inventor: KUBOTA, Isao, Res. & Dev. Ctr, Zeon Corporation, Kawasaki-shi, Kanagawa 210-9507 (JP); AIMURA, Yoshiaki, Res. & Dev. Ctr., Zeon Corp., Kawasaki-shi, Kanagawa 210-9507 (JP); TSUGAWA, Daisuke, Res. & Dev. Ctr, Zeon Corp., Kawasaki-shi, Kanagawa 210 9507 (JP)
(74) Representative: Albrecht, Thomas
(86) International application number: PCT/JP2002/002076
(87) International publication number: WO 2002/072697

(56) References cited:
- EP-A- 1 110 980
- JP-A- 11 100 478
- JP-A- 11 140 264
- JP-A- 11 343 378
- DATABASE WPI Section Ch, Week 199923 Derwent Publications Ltd., London, GB; Class A14, AN 1999-267257 XP002366095 -& JP 11 080488 A (NIPPON MEKTRON KK) 26 March 1999 (1999-03-26) & JP 11 080488 A (NIPPON MEKTRON KK) 26 March 1999 (1999-03-26)
- DATABASE WPI Section Ch, Week 200170 Derwent Publications Ltd., London, GB; Class A14, AN 2001-611100 XP002366096 -& JP 2001 207008 A (ZEON CORP) 31 July 2001 (2001-07-31) & JP 2001 207008 A (ZEON CORP) 31 July 2001 (2001-07-31)

## Description

### Technical Field

This invention relates to a carboxyl group-containing acrylic rubber composition used as vulcanizable shaping materials such as sealing material, hose material, vibration insulator material, tube material, belt material and boot material.

### Background Art

An acrylic rubber has good heat resistance and oil resistance and hence is widely used in automobile and other related fields. However, attempts are being made for developing acrylic rubbers having more enhanced heat resistance and oil resistance, and reduced compression set, which are eagerly desired as material for parts to be placed in contact with metal or oil, such as sealing material, hose material, vibration insulator material, tube material, belt material and boot material. Further, an improvement is required for minimizing scorch of an acrylic rubber.

As an improved acrylic rubber used in the above-mentioned fields, an ethylene-acrylic acid ester-butenedioic acid monoester copolymer is known (for example, Japanese Unexamined Patent Publication [JP-A] No. S50-45031). A vulcanizate of this copolymer has poor oil resistance.

A proposal has been made for providing a rubber material having good oil resistance and reduced permanent set, which comprises vulcanizing an acrylic rubber having copolymerized therein a fumaric acid mono-lower-alkyl ester with an aromatic diamine vulcanizer and a guanidine vulcanization aid (for example, JP-A H11-92614). This proposal has a problem in that scorch is liable to occur at a vulcanization step.

Another proposal has been made which comprises incorporating 1,8-diazabicyclo[5.4.0]undecene-7, 1,5-diazabicyclo[4.3.0]nonene-5, or a salt of these compounds in an acrylic rubber, and vulcanizing the thus-obtained acrylic rubber composition with a polyamine vulcanizer (for example, JP-A H11-80488). However, 1,8-diazabicyclo[5.4.0]-undecene-7 and 1,5-diazabicyclo[4.3.0]nonene-5 tend to cause scorch at a vulcanization step.

### Disclosure of the Invention

An object of the present invention is to provide an acrylic rubber composition exhibiting good stability to scorch at a vulcanization step, and giving a vulcanizate having excellent heat resistance and oil resistance.

To solve the above-mentioned problems, the inventors made extensive research, and found that the above object can be achieved by an acrylic rubber composition comprising (A) a specific carboxyl group-containing acrylic rubber, (B) a primary monoamine compound and (C) a polyamine vulcanizer. The present invention has been completed based on this finding.

In accordance with the present invention, there is provided an acrylic rubber composition comprising (A) 100 parts by weight of an acrylic rubber comprising (a) 90 to 99.9% by weight of acrylic acid ester monomer units, (b) 0.1 to 10% by weight of carboxyl group-containing ethylenically unsaturated monomer units, and (c) 0 to 9.9% by weight of other copolymerizable monomer units, (B) 0.05 to 2.5 parts by weight of a primary monoamine compound, and (C) 0.05 to 5 parts by weight of a polyamine vulcanizer.

There is further provided a vulcanizate obtained by vulcanizing the above-mentioned acrylic rubber composition.

### Best Mode for Carrying Out the Invention

The vulcanizable acrylic rubber composition of the present invention comprises (A) 100 parts by weight of an acrylic rubber comprising (a) 90 to 99.9% by weight of acrylic acid ester monomer units, (b) 0.1 to 10% by weight of carboxyl group-containing ethylenically unsaturated monomer units, and (c) 0 to 9.9% by weight of other copolymerizable monomer units, (B) 0.05 to 2.5 parts by weight of a primary monoamine compound, and (C) 0.05 to 5 parts by weight of a polyamine vulcanizer.

The acrylic rubber used in the present invention comprises (a) 90 to 99.9% by weight of acrylic acid ester monomer units, (b) 0.1 to 10% by weight of carboxyl group-containing ethylenically unsaturated monomer units, and (c) 0 to 9.9% by weight of other copolymerizable monomer units.

The acrylic acid ester monomer units (a) are preferably derived from only an alkyl acrylate monomer, or a combination of an alkyl acrylate monomer with an alkoxyalkyl acrylate monomer. The combination of an alkyl acrylate monomer with an alkoxyalkyl acrylate monomer is especially preferable.

The alkyl acrylate monomer preferably includes those which have an alkyl group having 1 to 8 carbon atoms, and, as specific examples thereof, there can be mentioned methyl acrylate, ethyl acrylate, n-propyl acrylate, n-butyl acrylate, isopropyl acrylate, isobutyl acrylate, n-hexyl acrylate, 2-ethylhexyl acrylate and cyclohexyl acrylate. Ethyl acrylate and n-butyl acrylate are especially preferable.

The alkoxyalkyl acrylate monomer preferably includes those which have an alkoxyalkyl group having 2 to 8 carbon atoms, and, as specific examples thereof, there can be mentioned methoxymethyl acrylate, ethoxymethyl acrylate, 2-ethoxyethyl acrylate, 2-butoxyethyl acrylate, 2-methoxyethyl acrylate, 2-propoxyethyl acrylate, 3-methoxypropyl acrylate and 4-methoxybutyl acrylate. 2-Ethoxyethyl acrylate and 2-methoxyethyl acrylate are especially preferable.

In the case when an alkyl acrylate and an alkoxyalkyl acrylate are used in combination as the acrylic acid ester monomer (a), the amount of alkyl acrylate monomer units is preferably in the range of 30 to 90% by weight, more preferably 40 to 89% by weight and especially preferably 45 to 88% by weight, based on the acrylic acid ester monomer units (a). If the amount of alkyl acrylate monomer units is too small, tensile strength and elongation of a vulcanizate are liable to be poor. In contrast, if the amount of alkyl acrylate monomer units is too large, oil resistance tends to be poor.

The amount of acrylic acid ester monomer units (a) is in the range of 90 to 99.9% by weight, preferably 92.5 to 99.7% by weight and more preferably 95 to 99.5% by weight, based on the weight of acrylic rubber (A). If the amount of monomer units (a) is too small, strengths and elongation of a vulcanizate are liable to be poor. In contrast, if the amount of monomer units (a) is too large, the rubber composition becomes difficult to vulcanize.

As specific examples of the carboxyl group-containing ethylenically unsaturated monomer (b), there can be mentioned carboxylic acid monomers such as acrylic acid, methacrylic acid, ethacrylic acid, itaconic acid, maleic acid, fumaric acid and citraconic acid; and butenedioic acid monoalkyl ester monomers such as monomethyl maleate, monoethyl maleate, mono-n-butyl maleate, monomethyl fumarate, monoethyl fumarate and mono-n-butyl fumalate. The carboxyl group may be a carboxylic acid anhydride group, and thus, carboxylic acid anhydride monomers such as maleic anhydride and citraconic anhydride can be used as the monomer (b). Of these monomers (b), butenedioic acid monoalkyl ester monomers are preferable. Monoethyl maleate, mono-n-butyl maleate, momonoethyl fumarate and mono-n-butyl fumarate are especially preferable.

The amount of carboxyl group-containing ethylenically unsaturated monomer units (b) is in the range of 0.1 to 10% by weight, preferably 0.3 to 7.5% by weight and more preferably 0. 5 to 5% by weight, based on the weight of acrylic rubber (A). If the amount of monomer units (b) is too small, the rubber composition becomes difficult to vulcanize. In contrast, if the amount of monomer units (b) is too large, rubber elasticity of a vulcanizate is poor.

The acrylic rubber (A) may comprise units (c) of other copolymerizable monomer in addition to the above-mentioned monomer units (a) and monomer units (b). The optional monomer includes, for example, conjugated diene monomers, non-conjugated diene monomers, aromatic vinyl monomers, α,β-ethylenically unsaturated nitrile monomers, amide group-containing acrylic or methacrylic monomers, polyfunctional diacrylic or dimethacrylic monomers and aliphatic vinyl monomers.

As specific examples of the optional monomer, there can be mentioned conjugated diene monomers such as 1, 3-butadiene, chloroprene and piperylene; non-conjugated diene monomers such as 1,2-butadiene, 1,4-pentadiene, dicyclopentadiene, norbornene, ethylidenenorbornene, hexadiene and norbornadiene; aromatic vinyl monomers such as styrene, α-methylstyrene and divinylbenzene; α,β-ethylenically unsaturated nitrile monomers such as acrylonitrile and methacrylonitrile; amide group-containing acrylic or methacrylic monomers such as acrylamide and methacrylamide; polyfunctional diacrylic or dimethacrylic monomers such as ethylene glycol diacrylate, propylene glycol diacrylate, ethylene glycol dimethacrylate and propylene glycol dimethacrylate; and aliphatic vinyl monomers such as vinyl chloride, vinylidene chloride, vinyl acetate, ethyl vinyl ether and butyl vinyl ether.

The amount of monomer units (c) is in the range of 0 to 9.9% by weight, preferably 0 to 7.2% by weight and especially preferably 0 to 4.5% by weight, based on the weight of acrylic rubber (A). If the amount of monomer units (c) is too large, a vulcanizate is poor in oil resistance and other properties required for an acrylic rubber.

The acrylic rubber preferably has a Mooney viscosity (ML₁₊₄, 100°C) of 10 to 70, more preferably 20 to 60 and especially preferably 30 to 50. If the Mooney viscosity is too small, processability and shapability of the rubber composition and mechanical strengths of a vulcanizate are liable to be poor. In contrast, the Mooney viscosity is too large, processability and shapability of the rubber composition are liable to be poor.

The acrylic rubber (A) preferably contains 5 × 10⁻⁴ to 4 × 10⁻¹ ephr, more preferably 2 × 10⁻³ to 2 × 10⁻¹ ephr and especially preferably 4 × 10⁻³ to 1 × 10⁻¹ ephr, of a carboxyl group. If the amount of carboxyl group in acrylic rubber (A) is too small, the vulcanization is insufficient and a vulcanizate has poor form-stability. In contrast, if the amount of carboxyl group is too large, a vulcanizate becomes hard and loses its rubber elasticity.

The primary monoamine compound (B) used in the present invention is a compound which is notionally obtainable by substituting one hydrogen atom of ammonia by an alkyl group. The primary monoamine compound (B) includes, for example, aliphatic primary monoamines, alicyclic primary monoamines, aromatic primary monoamines, amino-alcohols and amino-oxo compounds. Of these, aliphatic primary monoamines are preferable. Aliphatic primary monoamines having 8 to 20 carbon atoms are especially preferable.

As specific examples of the aliphatic primary monoamines, there can be mentioned methylamine, ethylamine, propylamine, isopropylamine, n-butylamine, t-butylamine, sec-butylamine, hexylamine, heptylamine, octylamine, nonylamine, decylamine, undecylamine, dodecylamine, tridecylamine, tetradecylamine, pentadecylamine, cetylamine, 2-ethylhexylamine, octadecylamine, allylamine, cis-2-butenylamine, 10-undecenylamine, trans-2-octadecenylamine, cis-9-octadecenylamine and nonadecylamine. Of these, aliphatic primary monoamines having 8 to 20 carbon atoms such as octylamine, decylamine, dodecylamine, tetradecylamine, cetylamine, octadecylamine, nonadecylamine and cis-9-octadecenylamine are preferable.

As specific examples of the alicyclic primary monoamines, there can be mentioned cyclopropylamine, cyclobutylamine, cyclopentylamine and cyclohexylamine. As specific examples of the aromatic primary monoamines, there can be mentioned aniline, o-toluidine, m-toluidine, benzylamine, α-naphthylamine and β-naphthylamine. As specific examples of the amino-alcohols, there can be mentioned aminoethanol, aminopropanol, D,L-alaninol, 2-aminobutyl alcohol, 2-amino-2-methylpropanol, 2-amino-2-hydroxymethyl-1,3-propanediol, 2-amino-2-methylpropane-1,3-diol, 2-amino-2-ethyl-1,3-propanediol, 1-chloro-3-aminopropane-2-ol, 3-amino-1,2-propanediol and 2-amino-1,3-propanediol. As specific examples of the amino-oxo compounds, there can be mentioned 3-methoxypropylamine and 3-ethoxypropylamine.

The amount of primary monoamine compound (B) in acrylic rubber (A) is in the range of 0.05 to 2.5 parts by weight, preferably 0.1 to 2 parts by weight and more preferably 0.2 to 1.5 parts by weight, based on 100 parts by weight of acrylic rubber (A). If the amount of primary monoamine compound (B) is too small, the rubber composition tends to have poor scorch stability. In contrast, if the amount of primary monoamine compound (B) is too large, a vulcanizate is liable to have an extremely low strength and a large compression set. In the case where the amount of primary monoamine compound (B) is in the above range, even when a polyamine vulcanizer (C) is used in combination with a vulcanization accelerator such as a phenol salt of 1,8-diazabicyclo[5.4.0]undecene-7, good scorch stability is obtained. Note, this is in contrast to the conventional use of a polyamine vulcanizer combined with this vulcanization accelerator, which usually causes scorch.

The polyamine vulcanizer (C) used in the present invention is a compound having two or more amino groups or a salt thereof and having a function of vulcanizing the acrylic rubber (A). The polyamine vulcanizer (C) preferably includes aliphatic polyamine compounds, aromatic polyamine compounds, and salts of these polyamine compounds. As to the polyfunctionality, diamine compounds, triamine compounds, and their salts are preferable. Diamine compounds and their salts are especially preferable. Aliphatic diamine compounds, aromatic diamine compounds, and their salts are most preferable. These polyamine vulcanizers (C) may be used either alone or as a combination of two or more thereof.

As specific examples of the polyamine vulcanizer (C), there can be mentioned aliphatic diamine compounds such as hexamethylenediamine, ethylenediamine and cyclohexanediamine; salts of aliphatic diamine compounds such as hexamethylenediamine carbamate and ethylenediamine carbamate; cinnamaldehyde addition products of aliphatic diamine compounds such as N,N'-dicinnamilidene-1,6-hexanediamine and N,N'-dicinnamilidene-1,2-ethylenediamine; aliphatic triamine compounds such as diethylenetriamine, cyclohexanetriamine, bis(hexamethylene)triamine and 3,3'-diaminodipropylamine; aromatic diamine compounds such as 4,4'-methylenedianiline, m-phenylenediamine, 4,4'-diaminodiphenyl ether, 3,4'-diaminodiphenyl ether, 4,4'-(m-phenylene-diisopropylidene)dianiline, 4,4'-(p-phenylene-diisopropylidene)dianiline, 2,2'-bis[4-(4-aminophenoxy)-phenyl]propane, 4,4'-diaminobenzanilide and 4,4'-bis(4-aminophenoxy)biphenyl; and aromatic triamine compounds such as N,N',N"-triphenyl-1,3,5-benzenetriamine.

The polyamine vulcanizer (C) further includes, for example, polyfunctional hydrazide compounds such as isophthalic acid dihydrazide, terephthalic acid dihydrazide, phthalic acid dihydrazide, succinic acid dihydrazide, adipic acid dihydrazide, dodecandioic acid dihydrazide, fumaric acid dihydrazide, maleic acid dihydrazide, itaconic acid dihydrazide, trimellitic acid dihydrazide, 1,3,5-benzenetricarboxylic acid dihydrazide and aconitic acid dihydrazide; polyfunctional hydrazine compounds such as oxaloyl hydrazine, terephthaloyl hydrazine, isophthaloyl hydrazine, 3,3'-[methylenebis(1,4-phenyleneoxy)dipropione dihydrazide, thiocarbonohydrazide, oxaimide hydrazide, 1,3-benzenesulfonyl hydrazide and 4,4'-oxybis (benzenesulfonylhydrazide); polyisocyanate compounds such as naphthylene-1,5-diisocyanate, diphenylmethane diisocyanate, triphenylmethane triisocyanate, tris(p-isocyanatephenyl) thiophophite, dimethoxydiphenyl diisocyanate, tetramethyldiphenylene diisocyanate, phenylene diisocyanate, hexamethylene diisocyanate, dicyclohexylmethane diisocyanate, adduct-type hexamethylene diisocyanate, buret-type hexamethylene diisocyanate, isocyanurate-type hexamethylene diisocyanate, adduct-type tolylene diisocyanate, buret-type tolylene diisocyanate and isocyanurate-type tolylene diisocyanate; and blocked isocyanate compounds, which are a reaction product of a polyisocyanate compound with a blocking agent, such as diphenylmethane-bis-(4,4'-carbamoyl)-ε-caprolactam and diphenylmethane-bis-4,4'-N,N'-diethylene urea.

Of the above-recited polyamine vulcanizers (C), hexamethylenediamine carbamate, 4,4'-diaminodiphenyl ether, 4,4'-(m-phenylenediisopropylidene)dianiline, 4,4'-(p-phenylenediisopropylidene)dianiline and 2,2'-bis[4-(4-aminophenoxy)phenyl]propane are especially preferable.

The amount of polyamine vulcanizer (C) in acrylic rubber (A) is in the range of 0.05 to 5 parts by weight, preferably 0.1 to 4 parts by weight and more preferably 0.2 to 3 parts by weight, based on 100 parts by weight of acrylic rubber (A). If the amount of polyamine vulcanizer (C) is too large, a vulcanizate tends to be too hard and have reduced elongation, and exhibit too low elongation after heat loading. In contrast, the amount of polyamine vulcanizer (C) is too small, a vulcanizate is liable to have an extremely low strength and exhibit too large elongation change and too large tensile strength change after heat loading.

If required, a vulcanization accelerator can be used in combination with the polyamine vulcanizer (C) in the present invention. As the vulcanization accelerator, a base or a conjugate base is preferably used, which has a base dissociation constant of 10⁻¹² to 10⁺⁶ in water at 20°C and is substantially incapable of being reacted with vulcanizable monomer units to produce a vulcanizate.

Such vulcanization accelerator includes a guanidine accelerator, a quaternary onium salt accelerator, a tertiary amine accelerator, a tertiary phosphine accelerator, an alkali metal salt of weak acid, and an alkali metal alkoxide or alkali metal phenoxide. As specific examples of the vulcanization accelerator, there can be mentioned guanidine accelerators such as 1,3-diphenylguanidine and di-o-tolylguanidine; quaternary onium salt accelerators such as tetrabutylammonium bromide and tetrabutylammonium chloride; tertiary amine accelerators such as hexamethyltriethylenetetramine and 1,8-diazabicyclo[5.4.0]undecene-7; tertiary phosphine accerelators such as triphenylphosphine and tri(methylphenyl)phosphine; alkali metal salts of weak acid including inorganic weak acid salts such as sodium, potassium and lithium salts of phosphate, carbonate or bicarbonate, and organic weak acid salts such as stearic acid salts and lauric acid salts; alkali metal alkoxides such as sodium methoxide, sodium isopropoxide and potassium isopropoxide; and alkali metal phenoxides such as sodium phenoxide, potassium phenoxide and potassium benzoate.

The amount of vulcanization accelerator is preferably in the range of 0.1 to 20 parts by weight, more preferably 0.2 to 15 parts by weight and 0.3 to 10 parts by weight, based on the weight of acrylic rubber (A).

According to the need, the acrylic rubber composition of the present invention may contain additives provided that the effect of the invention is substantially obtained, which include, for example, a reinforcing agent, a filler, an antioxidant, a light stabilizer, a plasticizer, a processing aid, a lubricant, a sticking agent, a lubricating oil, a flame retardant, a mildew-proofing agent, an antistatic agent and a colorant.

The acrylic rubber composition of the present invention may further contain rubbers other than acrylic rubber (A), elastomers and resins, provided that the effect of the invention is substantially obtained. As specific examples of such rubbers, elastomers and resins, there can be mentioned rubbers such as natural rubber, acrylic rubbers other than the acrylic rubber (A), polybutadiene rubber, polyisoprene rubber, styrene-butadiene rubber and acrylonitrile-butadiene rubber; elastomers such as olefin elastomer, styrene elastomer, vinyl chloride elastomer, polyester elastomer, polyamide elastomer, polyurethane elastomer and polysiloxane elastomer; and resins such as polyolefin resin, polystyrene resin, polyacrylic resin, poluphenylene-ether resin, polyester resin and polycarbonate resin.

The acrylic rubber composition can be prepared by an appropriate mixing procedure such as roll mixing, Banbury mixing, screw mixing and solution mixing. The order in which the ingredients are mixed is not particularly limited, but, a mixing procedure can be adopted wherein ingredients incapable of being readily decomposed with heat are thoroughly mixed, and thereafter, ingredients capable of being readily reacted or decomposed with heat, such as a vulcanizer and a vulcanization accelerator, are mixed together within a time as short as possible.

The method of shaping the rubber composition is not particularly limited, and any method can be employed which includes, for example, compression molding, injection molding, transfer molding and extrusion shaping. The method of vulcanization may be appropriately chosen depending upon the shape of vulcanizate. Vulcanization can be carried out either simultaneously with shaping, or after shaping.

The vulcanization of the acrylic rubber composition can be effected by heating. The heating temperature is preerably in the range of 130 to 220°C, more preferably 140 to 200°C. The vulcanization time is preferably in the range of 30 seconds to 5 hours. The method of heating may be chosen from those which are conventionally employed for vulcanization of rubbers, such as press heating, steam heating, oven heating and hot-air heating. After vulcanization is once carried out, the obtained-vulcanizate may be further vulcanized by heating for a longer time to complete the vulcanization of interior part of the vulcanizate. The vulcanization time of such post vulcanization may be varied depending upon the heating method, the vulcanization temperature and the shape of vulcanizate, but the vulcanization time is preferably in the range of 1 to 48 hours. The heating method and the heating temperature may be appropriately chosen.

The invention will now be specifically described by the following examples and comparative examples. In these examples, parts and % for the composition of monomer units in rubber are by weight.

Acrylic rubbers used in these examples are as follows.

### Acrylic Rubber 1

Acrylic rubber 1 was comprised of 48% of ethyl acrylate units, 34% of n-butyl acrylate units, 14% of 2-methoxyethyl acrylate units and 4% of mono-n-methyl maleate, and had a carboxyl group content of 7 × 10⁻³ ephr and a Mooney viscosity (ML₁₊₄, 100°C) of 35. Acrylic rubber 1 corresponds to acrylic rubber (A) used in the invention.

### Acrylic Rubber 2

Acrylic rubber 2 was comprised of 50% of ethyl acrylate units, 34% of n-butyl acrylate units, 14% of 2-methoxyethyl acrylate units and 2% of mono-n-methyl fumarate units, and had a carboxyl group content of 9 × 10⁻³ ephr and a Mooney viscosity(ML₁₊₄, 100°C) of 35. Acrylic rubber 2 corresponds to acrylic rubber (A) used in the invention.

### Acrylic Rubber 3

Acrylic rubber 3 was comprised of 50% of ethyl acrylate units, 28% of n-butyl acrylate units, 20% of 2-methoxyethyl acrylate units and 2% of vinyl chloroacetate units, and had a Mooney viscosity (ML₁₊₄, 100°C) of 35. Acrylic rubber 3 had no carboxyl group and does not correspond to acrylic rubber (A) used in the invention.

### Acrylic rubber 4

Acrylic rubber 4 was a commercially available ethylene-acrylic acid ester-butenedioic acid monoester copolymer ("Vamac G" available from E.I. Du Pont Co.) having an ethylene content of at least 30% and a Mooney viscosity (ML₁₊₄, 100°C) of 16. Acrylic rubber 3 does not correspond to acrylic rubber (A) used in the invention.

The Mooney viscosity was determined according to JIS K6300 at 100°C.

### Example 1

A mixture comprised of 100 parts of acrylic rubber 1, 60 parts of carbon black, 2 parts of stearic acid, and 2 parts of 4,4'-bis(α,α-dimethylbenzyl)diphenylamine was kneaded at 50°C by using a Banbury mixer. To the kneaded mixture, 0.3 part of octadecylamine, 0.5 part of 4,4'-diaminodiphenyl ether and 2 parts of di-o-tolylguanidine were added, and the mixture was kneaded at 60°C by using an open roll.

Mooney scorch time t5 (min) of the thus-obtained rubber composition was measured according to JIS K6300 at 125°C.

The rubber composition was press-shaped into a specimen having a size of 15 cm × 15 cm × 2 mm at 170°C for 20 minutes while being simultaneously vulcanized. The specimen was maintained at 170°C for 4 hours for post-vulcanization. Heat resistance of the specimen was evaluated according to JIS K6257 wherein a hot-air aging test was conducted at 175°C for 70 hours. Tensile strength, elongation and hardness of the specimen were measured before and after the hot-air aging, and tensile strength change, elongation change and hardness change were determined.

Oil resistance was evaluated according to JIS K6258 wherein the specimen was immersed in IRM 903 testing oil at 150°C for 70 hours, and its volume was measured before and after the immersion to determine the volume change (%).

Further, the above-mentioned rubber composition was press-shaped into a specimen of O-ring form having a diameter of 3.1 mm at 170°C for 20 minutes while being simultaneously vulcanized. The O-ring was maintained further at 170°C for 4 hours for post-vulcanization. Compression set of the specimen was evaluated by a method wherein the O-ring was compressed by 25% in volume and maintained at 175°C for 70 hours. Then, the compression was relieved and the O-ring was maintained at a temperature of 23°C and a humidity of 50% for 30 minutes to determine the compression set.

The evaluation results are shown in Table 1.

### Example 2

The procedures described in Example 1 were repeated wherein the amount of octadecylamine was changed from 0.3 part to 0.5 part with all other conditions remaining the same. The evaluation results are shown in Table 1.

### Example 3

The procedures described in Example 1 were repeated wherein the amount of octadecylamine was changed from 0.3 part to 1 part with all other conditions remaining the same. The evaluation results are shown in Table 1.

### Example 4

The procedures described in Example 1 were repeated wherein 0.3 part of dodecylamine was used instead of 0.3 part of octadecylamine with all other conditions remaining the same. The evaluation results are shown in Table 1.

### Example 5

The procedures described in Example 1 were repeated wherein the amount of octadecylamine was changed from 0. 3 part to 1 part, and 1.3 parts of N,N-dicinnamilidene-1,6-hexanediamine was used instead of 0.5 part of 4,4'-diaminodiphenyl ether with all other conditions remaining the same. The evaluation results are shown in Table 1.

### Example 6

The procedures described in Example 1 were repeated wherein acrylic rubber 2 was used instead of acrylic rubber 1, and 1 part of 4,4'-(p-phenylenediisopropylidene)dianiline was used instead of 0.5 part of 4,4'-diaminodiphenyl ether with all other conditions remaining the same. The evaluation results are shown in Table 1.

### Example 7

The procedures described in Example 1 were repeated wherein acrylic rubber 2 was used instead of acrylic rubber 1, and 1 part of 2,2-bis[4-(4-aminophenoxy)phenyl]propane was used instead of 0.5 part of 4,4'-diaminodiphenyl ether with all other conditions remaining the same. The evaluation results are shown in Table 2.

### Example 8

The procedures described in Example 1 were repeated wherein acrylic rubber 2 was used instead of acrylic rubber 1, and 2.5 parts of 2,2-bis[4-(4-aminophenoxy)phenyl]propane was used instead of 0.5 part of 4,4'-diaminodiphenyl ether with all other conditions remaining the same. The evaluation results are shown in Table 2.

### Example 9

The procedures described in Example 1 were repeated wherein 1 part of a phenol salt of 1,8-diaza-bicyclo[5.4.0]undecene-7 (DBU) was used instead of 2 parts of di-o-tolylguanidine with all other conditions remaining the same. The evaluation results are shown in Table 2.

### Comparative Example 1

The procedures described in Example 1 were repeated wherein 0.3 part of dioctadecylamine was used instead of 0.3 part of octadecylamine with all other conditions remaining the same. The evaluation results are shown in Table 2.

### Comparative Example 2

The procedures described in Example 1 were repeated wherein octadecylamine was not used, and 1.3 parts of N,N-dicinnamilidene-1,6-hexanediamine was used instead of 0.5 part of 4,4'-diaminodiphenyl ether with all other conditions remaining the same. The evaluation results are shown in Table 1.

### Comparative Example 3

The procedures described in Example 1 were repeated wherein octadecylamine was not used with all other conditions remaining the same. The evaluation results are shown in Table 2.

### Comparative Example 4

The procedures described in Example 1 were repeated wherein octadecylamine was not used, and 1 part of a phenol salt of 1,8-diaza-bicyclo[5.4.0]undecene-7 (DBU) was used instead of 2 parts of di-o-tolylguanidine with all other conditions remaining the same. The evaluation results are shown in Table 3.

### Comparative Example 5

The procedures described in Example 1 were repeated wherein acrylic rubber 2 was used instead of acrylic rubber 1 and octadecylamine was not used with all other conditions remaining the same. The evaluation results are shown in Table 3.

### Comparative Example 6

The procedures described in Example 1 were repeated wherein the amount of octadecylamine was changed from 0.3 part to 3 parts with all other conditions remaining the same. The evaluation results are shown in Table 3. In this example, t5 was more than 60 and a vulcanizate could not be obtained. Therefore, properties of a vulcanizate were not evaluated.

### Comparative Example7

The procedures described in Example 1 were repeated wherein acrylic rubber 2 was used instead of acrylic rubber 1, and 6 parts of 2,2-bis[4-(4-aminophenoxy)phenyl]propane was used instead of 0.5 part of 4,4'-diaminodiphenyl ether with all other conditions remaining the same. The evaluation results are shown in Table 3.

### Comparative Example 8

The procedures described in Example 1 were repeated wherein acrylic rubber 3 was used instead of acrylic rubber 1, octadecylamine was not used, 0.5 part of zinc dibutyldithiocarbamate was used instead of 2 parts of di-o-tolylguanidine, and 1.5 parts of 2,4,6-trimercapto-2-triazine was used instead of 0.5 part of 4,4'-diaminodiphenyl ether with all other conditions remaining the same. The evaluation results are shown in Table 3.

### Comparative Example 9

The procedures described in Example 1 were repeated wherein acrylic rubber 4 was used instead of acrylic rubber 1, the amount of 4,4'-diaminodiphenyl ether was changed from 0.5 part to 1.6 parts, and the amount of di-o-tolylguanidine was changed from 2 parts to 4 parts with all other conditions remaining the same. The evaluation results are shown in Table 3.

**Table 1**

| | Examples | | | | | |
|---|---|---|---|---|---|---|
| | 1 | 2 | 3 | 4 | 5 | 6 |
| Rubber Composition (wt. parts) | | | | | | |
| Acrylic Rubber (A) | | | | | | |
| Acrylic rubber 1 | 100 | 100 | 100 | 100 | 100 | - |
| Acrylic rubber 2 | - | - | - | - | - | 100 |
| Acrylic Rubber Other Than | | | | | | |
| Acrylic Rubber (A) | | | | | | |
| Acrylic rubber 3 | - | - | - | - | - | - |
| Acrylic rubber 4 | - | - | - | - | - | - |
| Primary Monoamine Compound (B) | | | | | | |
| Octadecylamine | 0.3 | 0.5 | 1 | - | 1 | 0.3 |
| Dodecylamine | - | - | - | 0.3 | - | - |
| Secondary Monoamine Compound | | | | | | |
| Dioctadecylamine | - | - | - | - | - | - |
| Polyamine Vulcanizer (C) | | | | | | |
| 4,4'-diaminodiphenyl ether | 0.5 | 0.5 | 0.5 | 0.5 | - | - |
| N,N-dicinnamilidene-1,6-hexadiamine | - | - | - | - | 1.3 | - |
| 4,4'-(p-phenylenediiso-propylidene)dianiline | - | - | - | - | - | 1 |
| 2,2-bis[4-(4-aminophenoxy)-phenyl]propane | - | - | - | - | - | - |
| Vulcanizer Other Than | | | | | | |
| Polyamine Vulcanizer (C) | | | | | | |
| 2,4,6-trimercapto-2-triazine | - | - | - | - | - | - |
| Vulcanization Accelerator | | | | | | |
| Di-o-tolylguanidine | 2 | 2 | 2 | 2 | 2 | 2 |
| DBU phenol salt | - | - | - | - | - | - |
| Zinc dibutyldithiocarbamate | - | - | - | - | - | - |

| Properties of Rubber Composition | | | | | | |
|---|---|---|---|---|---|---|
| Mooney scorch time t5 (min) | 16.2 | 22.3 | 59.5 | 22.3 | 12.3 | 13.2 |

| Properties of Vulcanizate | | | | | | |
|---|---|---|---|---|---|---|
| After hot air aging | | | | | | |
| Tensile strength change (%) | -7 | -9 | -12 | -9 | -18 | -10 |
| Elongation change (%) | +4 | +8 | 0 | +8 | -7 | -9 |
| Hardness change (point) | +8 | +8 | +10 | +8 | 0 | +3 |
| Volume change (%) after immersion in oil | +18.8 | +19.0 | +20.6 | +19.0 | +18.8 | +19.2 |
| Compression set (%) | 52 | 53 | 63 | 53 | 64 | 63 |

**Table 2**

| | Examples | | | Comp. Ex. | | |
|---|---|---|---|---|---|---|
| | 7 | 8 | 9 | 1 | 2 | 3 |
| Rubber Composition (wt. parts) | | | | | | |
| Acrylic Rubber (A) | | | | | | |
| Acrylic rubber 1 | - | - | 100 | 100 | 100 | 100 |
| Acrylic rubber 2 | 100 | 100 | - | - | - | - |
| Acrylic Rubber Other Than | | | | | | |
| Acrylic Rubber (A) | | | | | | |
| Acrylic rubber 3 | - | - | - | - | - | - |
| Acrylic rubber 4 | - | - | - | - | - | - |
| Primary Monoamine Compound (B) | | | | | | |
| Octadecylamine | 0.3 | 0.3 | 0.3 | - | - | - |
| Dodecylamine | - | - | - | - | - | - |
| Secondary Monoamine Compound | | | | | | |
| Dioctadecylamine | - | - | - | 0.3 | - | - |
| Polyamine Vulcanizer (C) | | | | | | |
| 4,4'-diaminodiphenyl ether | - | - | 0.5 | 0.5 | - | 0.5 |
| N,N-dicinnamilidene- | | | | | | |
| 1,6-hexadiamine | - | - | - | - | 1.3 | - |
| 4,4'-(p-phenylenediiso- | | | | | | |
| propylidene)dianiline | - | - | - | - | - | - |
| 2,2-bis[4-(4-aminophenoxy)- | | | | | | |
| phenyl]propane | 1 | 2.5 | - | - | - | - |
| Vulcanizer Other Than | | | | | | |
| Polyamine Vulcanizer (C) | | | | | | |
| 2,4,6-trimercapto-2-triazine | - | - | - | - | - | - |
| Vulcanization Accelerator | | | | | | |
| Di-o-tolylguanidine | 2 | 2 | - | 2 | 2 | 2 |
| DBU phenol salt | - | - | 1 | - | - | - |
| Zinc dibutyldithiocarbamate | - | - | - | - | - | - |

| Properties of Rubber Composition | | | | | | |
|---|---|---|---|---|---|---|
| Mooney scorch time t5 (min) | 12.2 | 14.4 | 13.0 | 8.3 | 6.3 | 7.8 |

| Properties of Vulcanizate | | | | | | |
|---|---|---|---|---|---|---|
| After hot air aging | | | | | | |
| Tensile strength change (%) | -11 | -5 | -16 | -9 | -14 | -12 |
| Elongation change (%) | -5 | 0 | +5 | +4 | +5 | +14 |
| Hardness change (point) | +3 | +1 | +5 | +8 | 0 | +5 |
| Volume change (%) after immersion in oil | +19.2 | +18.2 | +19.2 | +18.1 | +17.9 | +18.1 |
| Compression set (%) | 57 | 48 | 60 | 50 | 57 | 53 |

**Table 3**

| | Comparative Examples | | | | | |
|---|---|---|---|---|---|---|
| | 4 | 5 | 6 7 | | 8 | 9 |
| Rubber Composition (wt. parts) | | | | | | |
| Acrylic Rubber (A) | | | | | | |
| Acrylic rubber 1 | 100 | - | 100 | - | - | - |
| Acrylic rubber 2 | - | 100 | - | 100 | - | - |
| Acrylic Rubber Other Than | | | | | | |
| Acrylic Rubber (A) | | | | | | |
| Acrylic rubber 3 | - | - | - | - | 100 | - |
| Acrylic rubber 4 | - | - | - | - | - | 100 |
| Primary Monoamine Compound (B) | | | | | | |
| Octadecylamine | - | - | 3 | 0.3 | - | 0.3 |
| Dodecylamine | - | - | - | - | - | - |
| Secondary Monoamine Compound | | | | | | |
| Dioctadecylamine | - | - | - | - | - | - |
| Polyamine Vulcanizer (C) | | | | | | |
| 4,4'-diaminodiphenyl ether | 0.5 | 0.5 | 0.5 | - | - | 1.6 |
| N,N-dicinnamilidene- | | | | | | |
| 1,6-hexadiamine | - | - | - | - | - | - |
| 4,4'-(p-phenylenediiso- | | | | | | |
| propylidene)dianiline | - | - | - | - | - | - |
| 2,2-bis[4-(4-aminophenoxy)- | | | | | | |
| phenyl]propane | - | - | - | 6 | - | - |
| Vulcanizer Other Than | | | | | | |
| Polyamine Vulcanizer (C) | | | | | | |
| 2,4,6-trimercapto-2-triazine | - | - | - | - | 1.5 | - |
| Vulcanization Accelerator | | | | | | |
| Di-o-tolylguanidine | - | 2 | 2 | 2 | - | 4 |
| DBU phenol salt | 1 | - | - | - | - | - |
| Zinc dibutyldithiocarbamate | - | - | - | - | 0.5 | - |

| Properties of Rubber Composition | | | | | | |
|---|---|---|---|---|---|---|
| Mooney scorch time t5 (min) | 8.0 | 6.5 | >60 | 20.9 | 9.1 | 20.6 |

| Properties of Vulcanizate | | | | | | |
|---|---|---|---|---|---|---|
| After hot air aging | | | | | | |
| Tensile strength change (%) | -21 | -16 | - | +4 | +3 | -3 |
| Elongation change (%) | +14 | -5 | - | -52 | +12 | -12 |
| Hardness change (point) | +5 | +1 | - | +6 | +3 | +4 |
| Volume change (%) after immersion in oil | +18.2+18.5 - | | | +18.4 +15.3 +50.2 | | |
| Compression set (%) | 60 | 56 | - | 94 | 80 | 43 |

As seen from the tables, a carboxyl group-containing acrylic rubber composition comprising a secondary monoamine compound instead of a primary monoamine compound has poor scorch stability (Comparative Example 1). A carboxyl group-containing acrylic rubber composition not comprising a primary monoamine compound also has poor scorch stability (Comparative Examples 2-5). A carboxyl group-containing acrylic rubber composition comprising a primary monoamine compound in a too large amount does not give a vulcanizate (Comparative Example 6). A carboxyl group-containing acrylic rubber composition comprising a polyamine vulcanizer in a too large amount gives a vulcanizate having poor heat resistance and large compression set (Comparative Example 7). A carboxyl group-containing acrylic rubber composition having chlorine as a crosslinking site has poor scorch stability and gives a vulcanizate having large compression set, even when a vulcanizer suitable for the crosslinking site is used (Comparative Example 8). An acrylic rubber composition comprising an ethylene-acrylic acid ester-butenedioic acid monoester copolymer (acrylic rubber 4) gives a vulcanizate having poor oil resistance (Comparative Example 9).

In contrast, acrylic rubber compositions of the present invention exhibit good scorch stability at vulcanization, and give a vulcanizate having good heat resistance and oil resistance, and small permanent set (Examples 1-9). Even when a polyamine vulcanizer is used in combination with a phenol salt of DBU as a vulcanization accelerator, the acrylic rubber compositions (which contain a primary monoamine compound (B)) exhibit a long Mooney scorch time and good scorch stability. This is in a striking contrast to the conventional acrylic rubber composition comprising a polyamine vulcanizer in combination with a phenol salt of DBU as a vulcanization accelerator which exhibits a short Mooney scorch time and poor scorch stability (Comparison of Comparative Example 4 with Example 10).

### Industrial Applicability

The acrylic rubber composition of the present invention exhibits good stability to scorch at a vulcanization step, and gives a vulcanizate having good heat resistance, oil resistance and metal corrosion resistance, and a low compression set. Due to these beneficial properties, a vulcanizate of the acrylic rubber composition has a broad application including, for example, sealing material, hose material, vibration insulator material, tube material, belt material and boot material.

## Claims

1. An acrylic rubber composition comprising:
(A) 100 parts by weight of an acrylic rubber comprising (a) 90 to 99. 9% by weight of acrylic acid ester monomer units, (b) 0.1 to 10% by weight of carboxyl group-containing ethylenically unsaturated monomer units, and (c) 0 to 9.9% by weight of other copolymerizable monomer units,
(B) 0.05 to 2.5 parts by weight of a primary monoamine compound, and
(C) 0.05 to 5 parts by weight of a polyamine vulcanizer.

2. The acrylic rubber composition according to claim 1, wherein the acrylic acid ester monomer units (a) constituting the acrylic rubber (A) are comprised of alkyl acrylate monomer units, or a combination of alkyl acrylate monomer units with alkoxyalkyl acrylate monomer units.

3. The acrylic rubber composition according to claim 2, wherein the acrylic acid ester monomer units (a) comprises 30 to 90% by weight of alkyl acrylate monomer units.

4. The acrylic rubber composition according to claim 1, wherein the acrylic rubber (A) comprises (a) 95 to 99.5% by weight of acrylic acid ester monomer units, (b) 0.5 to 5% by weight of carboxyl group-containing ethylenically unsaturated monomer units, and (c) 0 to 4.5% by weight of other copolymerizable monomer units.

5. The acrylic rubber composition according to claim 1, wherein the acrylic rubber (A) contains 5 × 10⁻⁴ to 4 × 10⁻¹ ephr of a carboxyl group.

6. The acrylic rubber composition according to claim 1, wherein the primary monoamine compound (B) is selected from the group consisting of aliphatic primary monoamines, alicyclic primary monoamines, aromatic primary monoamines, amino-alcohols and amino-oxo compounds.

7. The acrylic rubber composition according to claim 6, wherein the primary monoamine compound (B) is an aliphatic primary monoamine.

8. The acrylic rubber composition according to claim 7, wherein the aliphatic primary monoamine has 8 to 20 carbon atoms.

9. The acrylic rubber composition according to claim 8, wherein the aliphatic primary monoamine is selected from the group consisting of octylamine, decylamine, dodecylamine, tetradecylamine, cetylamine, octadecylamine, cis-9-octadecenylamine and nonadecylamine.

10. The acrylic rubber composition according to claim 1, wherein the amount of the primary monoamine compound (B) is in the range of 0.1 to 2 parts by weight based on 100 parts by weight of the acrylic rubber (A).

11. The acrylic rubber composition according to claim 1, wherein the polyamine vulcanizer (C) is selected from the group consisting of aliphatic polyamine compounds, aromatic polyamine compounds, and salts of these polyamine compounds.

12. The acrylic rubber composition according to claim 11, wherein the polyamine vulcanizer (C) is selected from the group consisting of aliphatic diamine compounds, aromatic diamine compounds, and salts of these diamine compounds.

13. The acrylic rubber composition according to claim 12, wherein the polyamine vulcanizer (C) is selected from the group consisting of aliphatic diamine compounds and salts thereof.

14. The acrylic rubber composition according to claim 1, wherein the amount of the polyamine vulcanizer (C) is in the range of 0.1 to 4 parts by weight based on 100 parts by weight of the acrylic rubber (A).

15. The acrylic rubber composition according to claim 1, which further comprises 0.1 to 20 parts by weight of a vulcanization accelerator based on 100 parts by weight of the acrylic rubber (A).

16. The acrylic rubber composition according to claim 15, wherein the vulcanization accelerator is a guanidine compound.

17. A vulcanizate obtainable by vulcanizing the acrylic rubber composition as claimed in any one of claims 1 to 16.

## Patentansprüche

1. Acrylkautschukzusammensetzung, umfassend:
(A) 100 Gew.-Teile eines Acrylkautschuks, umfassend
(a) 90 bis 99,9 Gew.-% Acrylsäureestermonomereinheiten,
(b) 0,1 bis 10 Gew.-% Carboxylgruppenenthaltende, ethylenisch ungesättigte Monomereinheiten und
(c) 0 bis 9,9 Gew.-% andere copolymerisierbare Monomereinheiten,
(B) 0,05 bis 2,5 Gew.-Teile einer primären Monoaminverbindung und
(C) 0,05 bis 5 Gew.-Teile eines Polyaminvulkanisators.

2. Acrylkautschukzusammensetzung nach Anspruch 1, wobei die Acrylsäureestermonomereinheiten (a), die den Acrylkautschuk (A) bilden, Alkylacrylatmonomereinheiten oder eine Kombination von Alkylacrylatmonomereinheiten mit Alkoxyalkylacrylatmonomereinheiten umfassen.

3. Acrylkautschukzusammensetzung nach Anspruch 2, wobei die Acrylsäureestermonomereinheiten (a) 30 bis 90 Gew.-% Alkylacrylatmonomereinheiten umfassen.

4. Acrylkautschukzusammensetzung nach Anspruch 1, wobei der Acrylkautschuk (A)
(a) 95 bis 99,5 Gew.-% Acrylsäureestermonomereinheiten,
(b) 0,5 bis 5 Gew.-% Carboxylgruppenenthaltende, ethylenisch ungesättigte Monomereinheiten und
(c) 0 bis 4,5 Gew.-% andere copolymerisierbare Monomereinheiten umfasst.

5. Acrylkautschukzusammensetzung nach Anspruch 1, wobei der Acrylkautschuk (A) 5 x 10⁻⁴ bis 4 x 10⁻¹ ephr einer Carboxylgruppe enthält.

6. Acrylkautschukzusammensetzung nach Anspruch 1, wobei die primäre Monoaminverbindung (B) aus der Gruppe, bestehend aus aliphatischen primären Monoaminen, alicyclischen primären Monoaminen, aromatischen primären Monoaminen, Aminoalkoholen und Aminooxoverbindungen, ausgewählt ist.

7. Acrylkautschukzusammensetzung nach Anspruch 6, wobei die primäre Monoaminverbindung (B) ein aliphatisches primäres Monoamin ist.

8. Acrylkautschukzusammensetzung nach Anspruch 7, wobei das aliphatische primäre Monoamin 8 bis 20 Kohlenstoffatome aufweist.

9. Acrylkautschukzusammensetzung nach Anspruch 8, wobei das aliphatische primäre Monoamin aus der Gruppe, bestehend aus Octylamin, Decylamin, Dodecylamin, Tetradecylamin, Cetylamin, Octadecylamin, cis-9-Octadecenylamin und Nonadecylamin, ausgewählt ist.

10. Acrylkautschukzusammensetzung nach Anspruch 1, wobei die Menge der primären Monoaminverbindung (B) im Bereich von 0,1 bis 2 Gew.-Teilen, bezogen auf 100 Gew.-Teile des Acrylkautschuks (A), liegt.

11. Acrylkautschukzusammensetzung nach Anspruch 1, wobei der Polyaminvulkanisator (C) aus der Gruppe, bestehend aus aliphatischen Polyaminverbindungen, aromatischen Polyaminverbindungen und Salzen dieser Polyaminverbindungen, ausgewählt ist.

12. Acrylkautschukzusammensetzung nach Anspruch 11, wobei der Polyaminvulkanisator (C) aus der Gruppe, bestehend aus aliphatischen Diaminverbindungen, aromatischen Diaminverbindungen und Salzen dieser Diaminverbindungen, ausgewählt ist.

13. Acrylkautschukzusammensetzung nach Anspruch 12, wobei der Polyaminvulkanisator (C) aus der Gruppe, bestehend aus aliphatischen Diaminverbindungen und Salzen davon, ausgewählt ist.

14. Acrylkautschukzusammensetzung nach Anspruch 1, wobei die Menge des Polyaminvulkanisators (C) im Bereich von 0,1 bis 4 Gew.-Teilen, bezogen auf 100 Gew.-Teile des Acrylkautschuks (A), liegt.

15. Acrylkautschukzusammensetzung nach Anspruch 1, die des Weiteren 0,1 bis 20 Gew.-Teile eines Vulkanisierungsbeschleunigers, bezogen auf 100 Gew.-Teile des Acrylkautschuks (A), umfasst.

16. Acrylkautschukzusammensetzung nach Anspruch 15, wobei der Vulkanisierungsbeschleuniger eine Guanidinverbindung ist.

17. Vulkanisat, das durch Vulkanisieren der Acrylkautschukzusammensetzung nach einem der Ansprüche 1 bis 16 erhältlich ist.

## Revendications

1. Composition de caoutchouc acrylique comprenant :
(A) 100 parties en poids d'un caoutchouc acrylique comprenant (a) 90 à 99,9 % en poids de motifs monomères d'ester d'acide acrylique, (b) 0,1 à 10 % en poids de motifs monomères à insaturation éthylénique contenant un groupe carboxyle et (c) 0 à 9,9 % en poids d'autres motifs monomères copolymérisables,
(B) 0,05 à 2,5 parties en poids d'un composé de monoamine primaire, et
(C) 0,05 à 5 parties en poids d'un agent de vulcanisation à base de polyamine.

2. Composition de caoutchouc acrylique selon la revendication 1, dans laquelle les motifs monomères d'ester d'acide acrylique (a) constituant le caoutchouc acrylique (A) sont composés de motifs monomères d'acrylate d'alkyle, ou d'une combinaison de motifs monomères d'acrylate d'alkyle avec des motifs monomères d'acrylate d'alcoxyalkyle.

3. Composition de caoutchouc acrylique selon la revendication 2, dans laquelle les motifs monomères d'ester d'acide acrylique (a) comprennent 30 à 90 % en poids de motifs monomères d'acrylate d'alkyle.

4. Composition de caoutchouc acrylique selon la revendication 1, dans laquelle le caoutchouc acrylique (A) comprend (a) 95 à 99,5 % en poids de motifs monomères d'ester d'acide acrylique, (b) 0,5 à 5 % en poids de motifs monomères à insaturation éthylénique contenant un groupe carboxyle, et (c) 0 à 4,5 % en poids d'autres motifs monomères copolymérisables.

5. Composition de caoutchouc acrylique selon la revendication 1, dans laquelle le caoutchouc acrylique (A) contient 5 x 10⁻⁴ à 4 x 10⁻¹ pce (équivalent pour cent parties d'élastomère) d'un groupe carboxyle.

6. Composition de caoutchouc acrylique selon la revendication 1, dans laquelle le composé de monoamine primaire (B) est sélectionné dans le groupe consistant en des monoamines primaires aliphatiques, des monoamines primaires alicycliques, des monoamines primaires aromatiques, des aminoalcools et des composés amino-oxo.

7. Composition de caoutchouc acrylique selon la revendication 6, dans laquelle le composé de monoamine primaire (B) est une monoamine primaire aliphatique.

8. Composition de caoutchouc acrylique selon la revendication 7, dans laquelle la monoamine primaire aliphatique comporte 8 à 20 atomes de carbone.

9. Composition de caoutchouc acrylique selon la revendication 8, dans laquelle la monoamine primaire aliphatique est sélectionnée dans le groupe consistant en octylamine, décylamine, dodécylamine, tétradécylamine, cétylamine, octadécylamine, cis-9-octadécénylamine et nonadécylamine.

10. Composition de caoutchouc acrylique selon la revendication 1, dans laquelle la quantité du composé de monoamine primaire (B) est dans la plage de 0,1 à 2 parties en poids sur la base de 100 parties en poids du caoutchouc acrylique (A).

11. Composition de caoutchouc acrylique selon la revendication 1, dans laquelle l'agent de vulcanisation à base de polyamine (C) est sélectionné dans le groupe consistant en des composés de polyamine aliphatique, des composés de polyamine aromatique et des sels de ces composés de polyamine.

12. Composition de caoutchouc acrylique selon la revendication 11, dans laquelle l'agent de vulcanisation à base de polyamine (C) est sélectionné dans le groupe consistant en des composés de diamine aliphatique, des composés de diamine aromatique et des sels de ces composés de diamine.

13. Composition de caoutchouc acrylique selon la revendication 12, dans laquelle l'agent de vulcanisation à base de polyamine (C) est sélectionné dans le groupe consistant en des composés de diamine aliphatique et des sels de ceux-ci.

14. Composition de caoutchouc acrylique selon la revendication 1, dans laquelle la quantité de l'agent de vulcanisation à base de polyamine (C) se trouve dans la plage de 0,1 à 4 parties en poids sur la base de 100 parties en poids du caoutchouc acrylique (A).

15. Composition de caoutchouc acrylique selon la revendication 1, qui comprend en outre 0,1 à 20 parties en poids d'un accélérateur de vulcanisation sur la base de 100 parties en poids du caoutchouc acrylique (A).

16. Composition de caoutchouc acrylique selon la revendication 15, dans laquelle l'accélérateur de vulcanisation est un composé de guanidine.

17. Vulcanisat pouvant être obtenu en vulcanisant la composition de caoutchouc acrylique selon l'une quelconque des revendications 1 à 16.
